# FASCICULE DE BREVET EUROPEEN

(11) **EP 3 943 738 B1**
(45) Date de publication et mention de la délivrance du brevet: **29.03.2023**
(21) Numéro de dépôt: 21185195.1
(22) Date de dépôt: 13.07.2021
(51) Int. Cl.: F02K 1/72

(54) **TURBORÉACTEUR DOUBLE FLUX COMPORTANT UN SYSTÈME D'OBTURATION DE LA VEINE DU FLUX SECONDAIRE COMPORTANT DES VOILES**
ZWEISTRAHLIGES TRIEBWERK MIT EINEM ABDICHTUNGSSYSTEM FÜR DIE SEKUNDÄRSTRÖMUNG, DAS SEGEL UMFASST
DUAL-FLOW TURBOJET ENGINE COMPRISING A SYSTEM FOR SEALING THE VEIN OF THE SECONDARY STREAM COMPRISING PANELS

(30) Priorité: 21.07.2020 FR 2007644
(43) Date de publication de la demande: 26.01.2022
(73) Titulaire: AIRBUS OPERATIONS, 31060 Toulouse Cedex 9 (FR)
(72) Inventeur: THUBERT, Benjamin, 31060 TOULOUSE (FR); WINDHOLS, Kevin, 31060 TOULOUSE (FR)
(74) Mandataire: Cabinet Le Guen Maillet

(56) Documents cités:
- FR-A1- 3 076 864
- FR-A1- 3 087 848
- US-A- 3 330 115
- US-A- 3 366 349

## Description

### DOMAINE TECHNIQUE

La présente invention concerne un turboréacteur double flux qui comporte des voiles souples et un mécanisme de déploiement qui déploie les voiles pour obturer la veine du flux secondaire et un mécanisme de pliage qui plie les voiles pour libérer la veine du flux secondaire, ainsi qu'un aéronef comportant au moins un tel turboréacteur double flux.

### ÉTAT DE LA TECHNIQUE ANTÉRIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée.

Les documents FR 3087 848 A1, FR 3 076 864 A1, US 3 366 349 A et US 3 330 115 A divulguent des turboréacteurs comprenant des inverseurs de poussée à volets souples de l' art antérieur.

Bien que les portes d'inversion donnent entière satisfaction, il est souhaitable de trouver des mécanismes différents, en particulier des mécanismes moins lourds.

### EXPOSÉ DE L'INVENTION

Un objet de la présente invention est de proposer un turboréacteur double flux qui comporte des voiles souples et un mécanisme de déploiement qui déploie les voiles pour obturer la veine du flux secondaire et un mécanisme de pliage qui plie les voiles pour libérer la veine du flux secondaire.

À cet effet, est proposé un turboréacteur double flux présentant une direction longitudinale et comportant un moteur et une nacelle entourant le moteur qui comporte un carter de soufflante, où une veine d'un flux secondaire est délimitée entre la nacelle et le moteur et dans laquelle un flux d'air circule de l'avant vers l'arrière du turboréacteur double flux, ladite nacelle comportant :
- une structure fixe fixée au carter de soufflante,
- un capot mobile qui est mobile en translation sur la structure fixe selon une direction de translation entre une position avancée dans laquelle le capot mobile est positionné de manière à ce qu'il soit rapproché du carter de soufflante et une position reculée dans laquelle le capot mobile est positionné de manière à ce qu'il soit éloigné du carter de soufflante pour définir entre eux une fenêtre ouverte entre la veine et l'extérieur de la nacelle,
- un ensemble d'actionneurs assurant le déplacement du capot mobile entre la position avancée et la position reculée, et inversement,
- une pluralité de rouleaux, chacun étant monté libre en rotation sur le capot mobile en arrière de la fenêtre lorsque le capot mobile est en position reculée,
- pour chaque rouleau, un voile souple, présentant un premier bord fixé au rouleau et un deuxième bord opposé au premier bord, où ledit voile peut prendre alternativement une position pliée dans laquelle ledit voile est enroulé autour du rouleau ou une position déployée dans laquelle ledit voile est déroulé du rouleau et étendu entre le rouleau et le moteur en travers de la veine,
- un mécanisme de déploiement arrangé pour déplacer le deuxième bord de chaque voile afin de déplacer ledit voile de la position pliée à la position déployée, et
- un mécanisme de pliage arrangé pour entraîner chaque rouleau en rotation afin de déplacer le voile associé audit rouleau de la position déployée à la position pliée.

Le remplacement des portes d'inversion et de leurs mécanismes d'entraînement par des voiles souples permet une réduction de masse.

Avantageusement, le mécanisme de déploiement comporte :
- pour chaque deuxième bord, une plaque solidaire du deuxième bord,
- pour chaque plaque, au moins une poulie de tirage montée libre en rotation sur ladite plaque,
- un câble qui passe par chaque poulie de tirage, et
- pour chaque extrémité dudit câble, un système de déplacement débrayable qui assure le tirage de ladite extrémité.

Avantageusement, il y a une poulie de tirage à chaque extrémité de ladite plaque.

Avantageusement, chaque système de déploiement comporte un ensemble de poulies de guidage et un enrouleur électrique sur lequel s'enroule le câble.

Selon un mode de réalisation particulier, le mécanisme de pliage comporte pour chaque rouleau, une poulie de déviation fixée de manière coaxiale au rouleau, une poulie d'enroulement fixée à la structure fixe, un câble d'enroulement dont une extrémité est fixée à la structure fixe et dont l'autre extrémité est fixée à la poulie d'enroulement et où le câble d'enroulement passe par la poulie de déviation, un amortisseur à azote dont un cylindre est fixé à la structure fixe et dont un piston est coulissant dans le cylindre, et un système de transformation qui assure la transformation du mouvement de rotation de la poulie d'enroulement en un mouvement de translation du piston et inversement.

Selon un mode de réalisation particulier, le mécanisme de pliage comporte pour chaque rouleau, une poulie de déviation fixée de manière coaxiale au rouleau, une poulie d'enroulement, un câble d'enroulement dont une extrémité est fixée à la structure fixe et dont l'autre extrémité est fixée à la poulie d'enroulement et où le câble d'enroulement passe par la poulie de déviation, et un enrouleur électrique débrayable sur lequel est fixée la poulie d'enroulement.

Avantageusement, pour chaque voile, le turboréacteur double flux comporte un élément de rappel qui contraint le voile en position pliée.

Avantageusement, chaque élément de rappel est un ressort hélicoïdal dont une extrémité est fixée au niveau du deuxième bord du voile considéré et une deuxième extrémité fixée au niveau d'un élément fixe par rapport au rouleau associé au voile considéré.

L'invention propose également un aéronef comportant au moins un turboréacteur double flux selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un turboréacteur double flux selon l'invention,
[Fig. 2] est une vue en perspective du turboréacteur double flux selon l'invention en position déployée des voiles,
[Fig. 3] est une représentation schématique d'un turboréacteur double flux selon l'invention vu en coupe par un plan vertical et en position avancée et pliée,
[Fig. 4] est une représentation schématique d'un turboréacteur double flux selon l'invention vu en coupe par un plan vertical et en position reculée et déployée,
[Fig. 5] est une représentation schématique et en vue de face d'un mécanisme de déploiement en position pliée,
[Fig. 6] est une représentation schématique et en vue de face du mécanisme de déploiement en position déployée, et
[Fig. 7] est une vue en perspective d'un mécanisme de pliage.

### EXPOSÉ DÉTAILLÉ DE MODES DE RÉALISATION

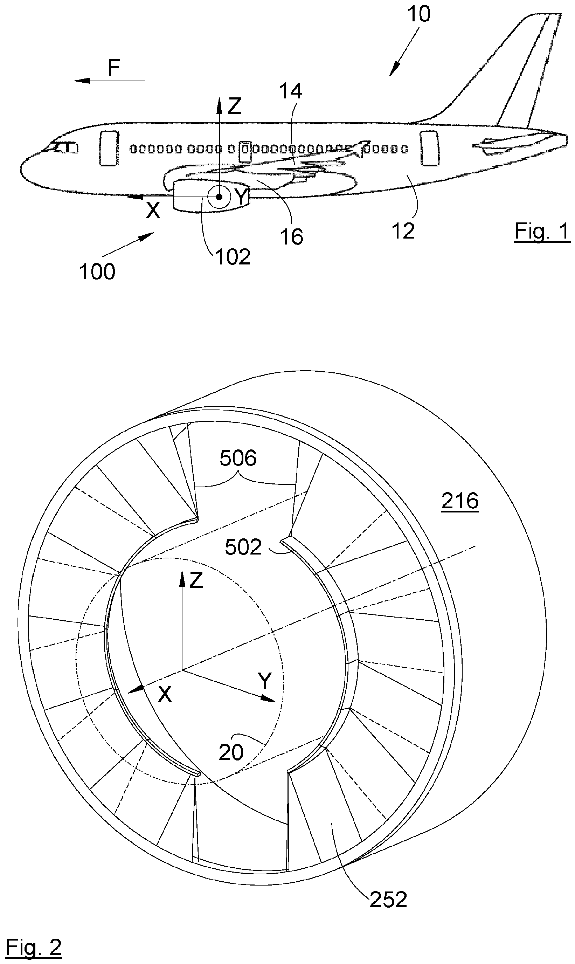

Dans la description qui suit, les termes relatifs à une position sont pris en référence au sens d'avancement d'un aéronef tel que représenté sur la Fig. 1 par la flèche F.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

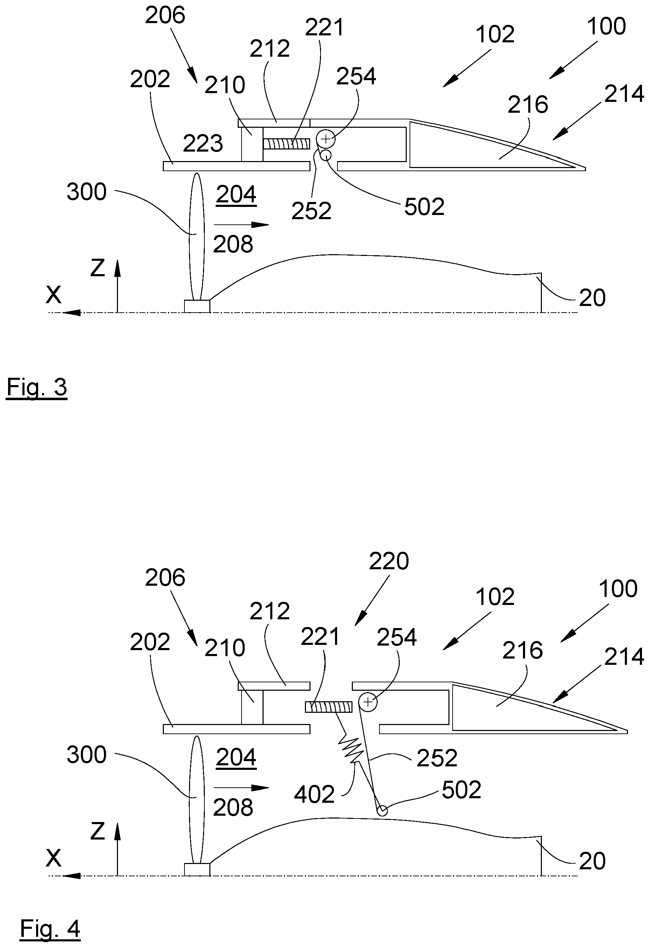

La Fig. 3 et la Fig. 4 montrent le turboréacteur double flux 100 qui présente une nacelle 102 et un moteur 20 qui est logé à l'intérieur de la nacelle 102. Le turboréacteur double flux 100 comporte également un carter de soufflante 202.

Dans la description qui suit, et par convention, on appelle X la direction longitudinale du turboréacteur double flux 100 qui est parallèle à l'axe longitudinal de l'aéronef 10 orienté positivement vers l'avant de l'aéronef 10, on appelle Y la direction transversale qui est horizontale lorsque l'aéronef est au sol, et Z la direction verticale, ces trois directions X, Y et Z étant orthogonales entre elles.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière du turboréacteur double flux 100.

La nacelle 102 présente une structure fixe 206 qui est montée fixe sur le carter de soufflante 202. La structure fixe 206 est composée en particulier ici d'un cadre avant 210 monté autour du carter de soufflante 202 et de panneaux extérieurs 212 fixés au cadre avant 210 et formant une surface aérodynamique extérieure.

La nacelle 102 présente un ensemble mobile 214 qui présente un capot mobile 216 qui forme ici les parois extérieures de la tuyère.

La nacelle 102 présente également des cascades 221 qui sont solidaires de l'ensemble mobile 214.

Le capot mobile 216 est monté mobile en translation selon une direction de translation globalement parallèle à la direction longitudinale X sur la structure fixe 206 de la nacelle 102.

Le capot mobile 216 est mobile entre une position avancée (Fig. 3) et une position reculée (Fig. 4) et inversement. En position avancée, le capot mobile 216 est positionné le plus en avant possible par rapport au sens d'avancement de manière à ce que le capot mobile 216 soit rapproché des panneaux extérieurs 212 et du carter de soufflante 202 et forme ainsi une surface aérodynamique continue. En position reculée, le capot mobile 216 est positionné le plus en arrière possible par rapport au sens d'avancement de manière à ce que le capot mobile 216 soit éloigné des panneaux extérieurs 212 et du carter de soufflante 202 de manière à définir entre eux une fenêtre 220 qui s'ouvre entre la veine 204 et l'extérieur et où se positionnent les cascades 221.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204. En position avancée, les cascades 221 logent entre les panneaux extérieurs 212 et le carter de soufflante 202.

En position reculée, le capot mobile 216 et le carter de soufflante 202 ainsi que les panneaux extérieurs 212 sont à distance et définissent entre eux la fenêtre 220 ouverte entre la veine 204 et l'extérieur de la nacelle 102. C'est-à-dire que l'air du flux secondaire 208 traverse la fenêtre 220 pour rejoindre l'extérieur du turboréacteur double flux 100 en traversant les cascades 221.

La translation du capot mobile 216 est réalisée par tous moyens appropriés, comme par exemple, des systèmes de glissières entre les poutres de la structure fixe 206 et le capot mobile 216.

La nacelle 102 comporte également un ensemble d'actionneurs (non représentés) assurant le déplacement en translation du capot mobile 216 entre la position avancée et la position reculée et inversement. Chaque actionneur est commandé par une unité de contrôle, par exemple du type processeur, qui commande les déplacements dans un sens ou dans l'autre selon les besoins de l'aéronef 10.

Chaque actionneur peut prendre par exemple la forme d'un vérin à double effet (deux directions de travail) dont le cylindre est fixé à la structure fixe 206 et une tige fixée au capot mobile 216.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

La Fig. 2 montre le capot mobile 216 et le moteur 20 qui est matérialisé ici par un cylindre en traits mixtes.

La nacelle 102 comporte une pluralité de rouleaux 254, chacun est monté libre en rotation sur le capot mobile 216. Chaque rouleau 254 est monté à l'intérieur du capot mobile 216, en dehors de la veine 204 et en arrière de la fenêtre 220 lorsque le capot mobile 216 est en position reculée. Les rouleaux 254 sont distribués angulairement autour de la direction longitudinale X le long du pourtour du capot mobile 216.

Pour chaque rouleau 254, la nacelle 102 comporte un voile 252 souple qui ici prend globalement la forme d'un trapèze. Chaque voile 252 peut prendre alternativement une position pliée (Fig. 3) ou une position déployée (Figs. 2 et 4).

En position pliée, chaque voile 252 s'enroule autour du rouleau 254 associé. Ainsi, en position pliée, le voile 252 est enroulé autour du rouleau 254 et en position déployée, le voile 252 est déroulé du rouleau 254 et étendu entre le rouleau 254 et le moteur 20 en travers de la veine 204 afin de l'obturer. Chaque voile 252 présente un premier bord qui est fixé au rouleau 254 et un deuxième bord opposé au premier bord et qui s'éloigne du rouleau 254 dans la position déployée et qui se rapproche du rouleau 254 en position pliée.

Ici, l'axe de rotation de chaque rouleau 254 est inscrit dans un plan perpendiculaire à la direction longitudinale X et est perpendiculaire à la direction radiale par rapport à la direction longitudinale X et passant par le milieu du rouleau 254.

La nacelle 102 comporte également un mécanisme de déploiement qui est arrangé pour déplacer le deuxième bord de chaque voile 252 afin de déplacer ledit voile 252 de la position pliée à la position déployée et un mécanisme de pliage qui est arrangé pour entraîner chaque rouleau 254 en rotation afin de déplacer le voile 252 associé audit rouleau 254 de la position déployée à la position pliée.

Les mécanismes de déploiement et de pliage sont synchronisés avec le déplacement du capot mobile 216 pour que le passage de la position pliée à la position déployée corresponde au passage de la position avancée à la position reculée, et pour que le passage de la position déployée à la position pliée corresponde au passage de la position reculée à la position avancée.

En position déployée, les voiles 252 sont positionnés en arrière de la fenêtre 220 en formant une barrière dans la veine 204 pour dévier le flux secondaire 208 provenant de l'avant vers la fenêtre 220. En position déployée, le deuxième bord de chaque voile 252 vient autour du moteur 20.

Le fonctionnement consiste ainsi, à partir de la position avancée/pliée, à commander l'activation des actionneurs pour déplacer le capot mobile 216 de la position avancée à la position reculée ce qui entraîne le déplacement des cascades 221 en face de la fenêtre 220.

Au cours de ce déplacement, le mécanisme de déploiement déploie chaque voile 252 en travers de la veine 204.

A l'inverse, le fonctionnement consiste ainsi, à partir de la position reculée/déployée, à commander l'activation des actionneurs pour déplacer le capot mobile 216 de la position reculée à la position avancée ce qui entraîne le déplacement des cascades 221 vers leur position initiale. Au cours de ce déplacement, le mécanisme de pliage plie chaque voile 252 sur l'extérieur de la veine 204.

L'utilisation de plusieurs voiles 252 souples permet un allégement de l'ensemble par rapport à l'utilisation de portes d'inversion de l'état de la technique. En outre, les voiles 252 permettent d'ajuster l'efficacité et l'aéramatch qui caractérisent un inverseur de poussée. Le terme « aéramatch » désigne ici le rapport entre la section de sortie de la tuyère en jet direct et la section de sortie de la tuyère en inversion de poussée.

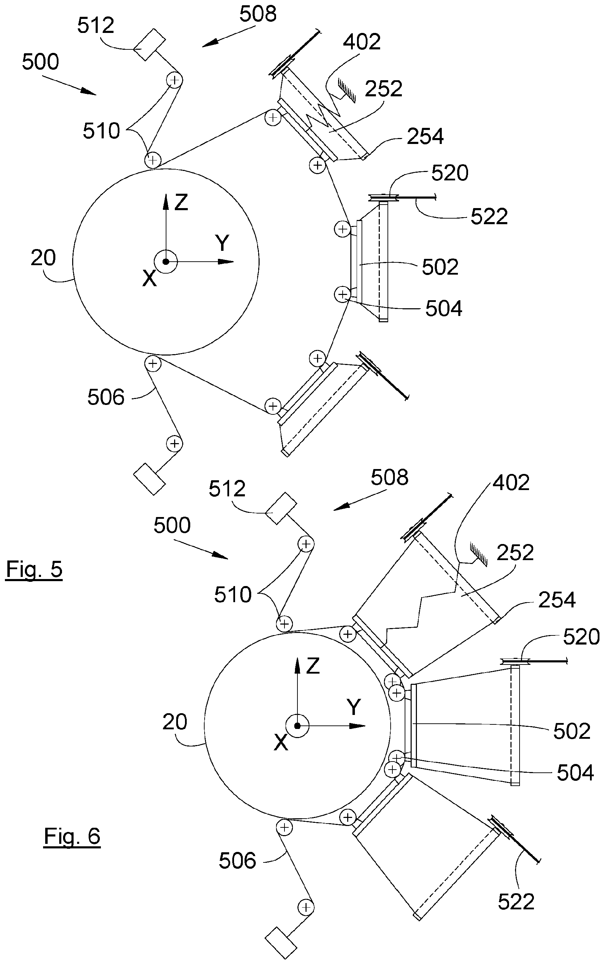

Les Figs. 5 et 6 montrent un mécanisme de déploiement 500 selon un mode de réalisation particulier. Sur ces Figs. 5 et 6, seulement trois voiles 252 sont représentés pour des facilités de compréhension mais les autres voiles 252 sont disposés angulairement autour de la direction longitudinale X.

Pour chaque voile 252, le mécanisme de déploiement 500 comporte une plaque 502 solidaire du deuxième bord dudit voile 252 et qui assure la rigidité dudit deuxième bord.

Chaque plaque 502 porte au moins une poulie de tirage 504 montée libre en rotation sur ladite plaque 502. Ici, pour des raisons d'équilibrage, la plaque 502 porte une poulie de tirage 504 à chaque extrémité de ladite plaque 502, c'est-à-dire à chaque extrémité du deuxième bord.

Pour plusieurs voiles 252, le mécanisme de déploiement 500 comporte également un câble 506 qui passe par chaque poulie de tirage 504 desdits plusieurs voiles 252. Dans le mode de réalisation de l'invention présenté à la Fig. 2, il y a deux câbles 506, un pour les voiles 252 de bâbord et un pour les voiles 252 de tribord. Bien sûr une répartition différente est possible.

Pour chaque extrémité du câble 506, le mécanisme de déploiement 500 comporte un système de déplacement 508 qui assure le tirage de ladite extrémité. Ainsi, un tirage de chaque extrémité du câble 506 va tendre ledit câble 506 et déployer chaque voile 252 par déplacement de la plaque 502 associée sous l'effet du câble 506.

Chaque système de déploiement 508 comporte ici un ensemble de poulies de guidage 510 et un enrouleur électrique 512 sur lequel s'enroule le câble 506.

Le mécanisme de pliage consiste en un mécanisme qui assure la rotation de chaque rouleau 254 dans le sens de l'enroulement du voile 252 sur le rouleau 254.

Lorsque le mécanisme de pliage est activé, le mécanisme de déploiement doit être débrayé pour ne pas générer de force de retenue du voile 252. Dans le cas des Figs. 5 et 6, chaque système de déplacement 508, et plus particulièrement chaque enrouleur électrique 512, doit être débrayé pour tourner librement.

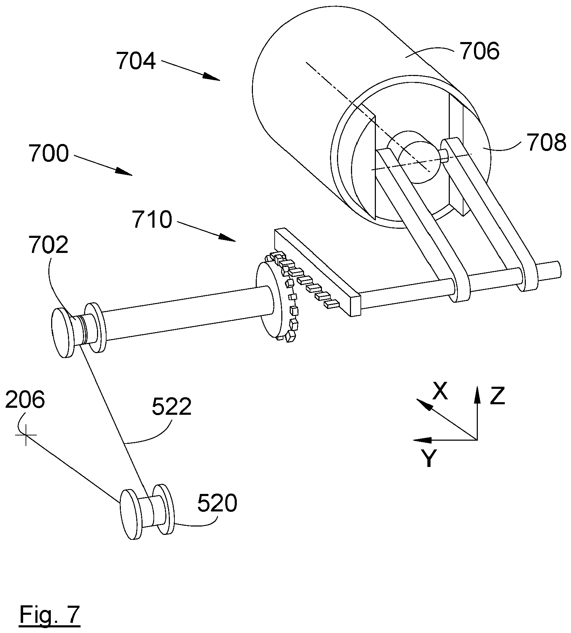

La Fig. 7 montre un mécanisme de pliage 700 selon un mode de réalisation particulier.

Pour chaque rouleau 254, le mécanisme de pliage 700 comporte une poulie de déviation 520 fixée de manière coaxiale au rouleau 254, une poulie d'enroulement 702 fixée à la structure fixe 206 et un câble d'enroulement 522 dont une extrémité est fixée à la structure fixe 206 et dont l'autre extrémité est fixée à la poulie d'enroulement 702 et où le câble d'enroulement 522 passe par la poulie de déviation 520.

Pour chaque rouleau 254, le mécanisme de pliage 700 comporte un amortisseur à azote 704 qui comporte un cylindre 706 fixé à la structure fixe 206 et un piston 708 coulissant dans le cylindre 706.

Pour chaque rouleau 254, le mécanisme de pliage 700 comporte également un système de transformation 710 qui assure la transformation du mouvement de rotation de la poulie d'enroulement 702 en un mouvement de translation du piston 708 et inversement.

Le système de transformation 710 prend ici la forme d'un système pignon-crémaillère.

A partir de la position avancée, l'ensemble mobile 214 recule, ce qui tend à déplacer la poulie de déviation 520 vers l'arrière et donc à dérouler le câble d'enroulement 522 de la poulie d'enroulement 702.

Par action du système de transformation 710, la rotation de la poulie d'enroulement 522 entraîne un enfoncement du piston 708 dans le cylindre 706 et donc une compression de l'azote présent dans l'amortisseur à azote 704.

A l'inverse, à partir de la position reculée, lorsque l'ensemble mobile 214 avance, le câble d'enroulement 522 se détend et la pression de l'azote contre le piston 708 repousse celui-ci et par action du système de transformation 710, le déplacement en translation du piston 708 entraîne la rotation de la poulie d'enroulement 702 qui enroule le câble d'enroulement 522 et en se faisant entraîne la rotation de la poulie de déviation 520 qui, à son tour, entraîne le rouleau 254 et donc l'enroulement du voile 252.

Selon un autre mode de réalisation, le mécanisme de pliage peut comporter un enrouleur électrique débrayable sur lequel est fixée la poulie d'enroulement 702 et qui remplace ainsi l'amortisseur à azote 704 et le système de transformation 710. Le mécanisme de pliage comporte alors pour chaque rouleau 254, une poulie de déviation 520 fixée de manière coaxiale au rouleau 254, une poulie d'enroulement 702, un câble d'enroulement 522 dont une extrémité est fixée à la structure fixe 206 et dont l'autre extrémité est fixée à la poulie d'enroulement 702 et où le câble d'enroulement 522 passe par la poulie de déviation 520, et un enrouleur électrique débrayable sur lequel est fixée la poulie d'enroulement 702. Le débrayage de l'enrouleur électrique permet le déploiement du voile 252 lorsque le mécanisme de déploiement 500 est actionné.

Une unité de contrôle est connectée aux différents éléments pour les activer selon les besoins. Par exemple, l'unité de contrôle commande la rotation dans un sens ou dans un autre de chaque enrouleur électrique et de chaque actionneur déplaçant le capot mobile 216.

Chaque voile 252 doit présenter des caractéristiques structurelles suffisantes pour résister aux efforts engendrés par le flux secondaire 208 et être suffisamment souple pour pouvoir se plier. Selon un mode de réalisation particulier, chaque voile 252 est constitué d'une structure en mailles souples sur laquelle est fixée une peau souple telle qu'un tissu par exemple.

L'invention a été plus particulièrement décrite dans le cas d'une nacelle sous une aile mais elle peut s'appliquer à une nacelle située à l'arrière du fuselage.

Pour limiter le risque de déploiement involontaire d'un voile 252, le turboréacteur 100 comporte pour chaque voile 252, un élément de rappel 402 qui contraint le voile 252 en position pliée. La force de l'élément de rappel 402 pour maintenir le voile 252 en position pliée est inférieure à la force développée par le mécanisme de déploiement 500 lors du passage de la position pliée à la position déployée.

Chaque élément de rappel 402 est par exemple un ressort hélicoïdal dont une extrémité est fixée au niveau du deuxième bord du voile 252 considéré et une deuxième extrémité fixée au niveau d'un élément fixe par rapport au rouleau 254 associé au voile 252 considéré, comme par exemple à un cadre des cascades 221. L'allongement du ressort hélicoïdal est suffisant pour permettre le déploiement du voile 252 en position déployée.

## Revendications

1. Turboréacteur double flux (100) présentant une direction longitudinale (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule de l'avant vers l'arrière du turboréacteur double flux (100), ladite nacelle (102) comportant :
- une structure fixe (206) fixée au carter de soufflante (202),
- un capot mobile (216) qui est mobile en translation sur la structure fixe (206) selon une direction de translation entre une position avancée dans laquelle le capot mobile (216) est positionné de manière à ce qu'il soit rapproché du carter de soufflante (202) et une position reculée dans laquelle le capot mobile (216) est positionné de manière à ce qu'il soit éloigné du carter de soufflante (202) pour définir entre eux une fenêtre (220) ouverte entre la veine (204) et l'extérieur de la nacelle (102),
- un ensemble d'actionneurs assurant le déplacement du capot mobile (216) entre la position avancée et la position reculée, et inversement,
- une pluralité de rouleaux (254), chacun étant monté libre en rotation sur le capot mobile (216) en arrière de la fenêtre (220) lorsque le capot mobile (216) est en position reculée,
- pour chaque rouleau (254), un voile (252) souple, présentant un premier bord fixé au rouleau (254) et un deuxième bord opposé au premier bord, où ledit voile (252) peut prendre alternativement une position pliée dans laquelle ledit voile (252) est enroulé autour du rouleau (254) ou une position déployée dans laquelle ledit voile (252) est déroulé du rouleau (254) et étendu entre le rouleau (254) et le moteur (20) en travers de la veine (204),
- un mécanisme de déploiement (500) arrangé pour déplacer le deuxième bord de chaque voile (252) afin de déplacer ledit voile (252) de la position pliée à la position déployée, et
- un mécanisme de pliage (700) arrangé pour entraîner chaque rouleau (254) en rotation afin de déplacer le voile (252) associé audit rouleau (254) de la position déployée à la position pliée.

2. Turboréacteur double flux (100) selon la revendication 1, **caractérisé en ce que** le mécanisme de déploiement (500) comporte :
- pour chaque deuxième bord, une plaque (502) solidaire du deuxième bord,
- pour chaque plaque (502), au moins une poulie de tirage (504) montée libre en rotation sur ladite plaque (502),
- un câble (506) qui passe par chaque poulie de tirage (504), et
- pour chaque extrémité dudit câble (506), un système de déplacement (508) débrayable qui assure le tirage de ladite extrémité.

3. Turboréacteur double flux (100) selon la revendication 2, **caractérisé en ce qu'**il y a une poulie de tirage (504) à chaque extrémité de ladite plaque (502).

4. Turboréacteur double flux (100) selon l'une des revendications 1 ou 2, **caractérisé en ce que** chaque système de déploiement (508) comporte un ensemble de poulies de guidage (510) et un enrouleur électrique (512) sur lequel s'enroule le câble (506).

5. Turboréacteur double flux (100) selon l'une des revendications 1 à 3, **caractérisé en ce que** le mécanisme de pliage (700) comporte pour chaque rouleau (254), une poulie de déviation (520) fixée de manière coaxiale au rouleau (254), une poulie d'enroulement (702) fixée à la structure fixe (206), un câble d'enroulement (522) dont une extrémité est fixée à la structure fixe (206) et dont l'autre extrémité est fixée à la poulie d'enroulement (702) et où le câble d'enroulement (522) passe par la poulie de déviation (520), un amortisseur à azote (704) dont un cylindre (706) est fixé à la structure fixe (206) et dont un piston (708) est coulissant dans le cylindre (706), et un système de transformation (710) qui assure la transformation du mouvement de rotation de la poulie d'enroulement (702) en un mouvement de translation du piston (708) et inversement.

6. Turboréacteur double flux (100) selon l'une des revendications 1 à 3, **caractérisé en ce que** le mécanisme de pliage comporte pour chaque rouleau (254), une poulie de déviation (520) fixée de manière coaxiale au rouleau (254), une poulie d'enroulement (702), un câble d'enroulement (522) dont une extrémité est fixée à la structure fixe (206) et dont l'autre extrémité est fixée à la poulie d'enroulement (702) et où le câble d'enroulement (522) passe par la poulie de déviation (520), et un enrouleur électrique débrayable sur lequel est fixée la poulie d'enroulement (702).

7. Turboréacteur double flux (100) selon l'une des revendications 1 à 6, **caractérisé en ce que**, pour chaque voile (252), il comporte un élément de rappel (402) qui contraint le voile (252) en position pliée.

8. Turboréacteur double flux (100) selon la revendication 7, **caractérisé en ce que** chaque élément de rappel (402) est un ressort hélicoïdal dont une extrémité est fixée au niveau du deuxième bord du voile (252) considéré et une deuxième extrémité fixée au niveau d'un élément fixe par rapport au rouleau (254) associé au voile (252) considéré.

9. Aéronef (10) comportant au moins un turboréacteur double flux (100) selon l'une des revendications précédentes.

## Patentansprüche

1. Mantelstromtriebwerk (100), das eine Längsrichtung (X) aufweist und einen Motor (20) und eine Gondel (102), die den Motor (20) umgibt und ein Gebläsegehäuse (202) umfasst, umfasst, wobei zwischen der Gondel (102) und dem Motor (20) ein Durchgang (204) für einen Sekundärstrom (208) abgegrenzt ist und wobei ein Luftstrom von der Vorderseite zur Rückseite des Mantelstromtriebwerks (100) strömt, wobei die Gondel (102) Folgendes umfasst:
- eine feste Struktur (206), die an dem Gebläsegehäuse (202) befestigt ist,
- eine bewegbare Abdeckung (216), die an der festen Struktur (206) zwischen einer vorgeschobenen Stellung, in der die bewegbare Abdeckung (216) so positioniert ist, dass sie dem Gebläsegehäuse (202) angenähert ist, und einer zurückgeschobenen Stellung, in der die bewegbare Abdeckung (216) so positioniert ist, dass sie von dem Gebläsegehäuse (202) entfernt ist, um zwischen ihnen ein zwischen dem Durchgang (204) und der Außenseite der Gondel (102) offenes Fenster (220)zu definieren, gemäß einer Translationsrichtung translatorisch bewegbar ist,
- einen Satz Betätigungselemente, die die Bewegung der bewegbaren Abdeckung (216) zwischen der vorgeschobenen Stellung und der zurückgeschobenen Stellung und umgekehrt gewährleisten,
- eine Vielzahl von Walzen (254), die jeweils frei drehbar an der bewegbaren Abdeckung (216) hinter dem Fenster (220) montiert sind, wenn sich die bewegbare Abdeckung (216) in der zurückgeschobenen Stellung befindet,
- für jede Walze (254), ein flexibles Segel (252), das eine erste Kante, die an der Walze (254) befestigt ist, und eine zweite Kante, die der ersten Kante gegenüberliegt, aufweist, wobei das Segel (252) alternativ eine eingezogene Stellung, in der das Segel (252) auf die Walze (254) aufgerollt ist, oder eine ausgezogene Stellung, in der das Segel (252) von der Walze (254) abgerollt ist und sich zwischen der Walze (254) und dem Motor (20) quer durch den Durchgang (204) erstreckt, einnehmen kann,
- einen Ausziehmechanismus (500), der dazu angeordnet ist, die zweite Kante jedes Segels (252) zu bewegen, um das Segel (252) von der eingezogenen Stellung in die ausgezogene Stellung zu bewegen, und
- einen Einziehmechanismus (700), der dazu angeordnet ist, jede Walze (254) in Drehung zu versetzen, um das mit der Walze (254) assoziierte Segel (252) von der ausgezogenen Stellung in die eingezogene Stellung zu bewegen.

2. Mantelstromtriebwerk (100) nach Anspruch 1, **dadurch gekennzeichnet, dass** der Ausziehmechanismus (500) Folgendes umfasst:
- für jede zweite Kante, eine Platte (502), die fest mit der zweiten Kante verbunden ist,
- für jede Platte (502), mindestens eine Zugrolle (504), die frei drehbar an der Platte (502) montiert ist,
- ein Seil (506), das über jede Zugrolle (504) verläuft, und
- für jedes Ende des Seils (506), ein auskoppelbares Bewegungssystem (508), das das Ziehen des Endes gewährleistet.

3. Mantelstromtriebwerk (100) nach Anspruch 2, **dadurch gekennzeichnet, dass** sich an jedem Ende der Platte (502) eine Zugrolle (504) befindet.

4. Mantelstromtriebwerk (100) nach einem der Ansprüche 1 oder 2, **dadurch gekennzeichnet, dass** jedes Ausziehsystem (508) einen Satz Führungsrollen (510) und einen elektrischen Aufroller (512), auf den das Seil (506) aufgerollt wird, umfasst.

5. Mantelstromtriebwerk (100) nach einem der Ansprüche 1 bis 3, **dadurch gekennzeichnet, dass** der Einziehmechanismus (700) für jede Walze (254) Folgendes umfasst: eine Umlenkrolle (520), die koaxial an der Walze (254) befestigt ist, eine Aufrollrolle (702), die an der festen Struktur (206) befestigt ist, ein Aufrollseil (522), dessen eines Ende an der festen Struktur (206) befestigt ist und dessen anderes Ende an der Aufrollrolle (702) befestigt ist und wobei das Aufrollseil (522) über die Umlenkrolle (520) verläuft, einen Stickstoffdämpfer (704), dessen Zylinder (706) an der festen Struktur (206) befestigt ist und dessen Kolben (708) in dem Zylinder (706) gleitet, und ein Umwandlungssystem (710), das die Umwandlung der Drehbewegung der Aufrollrolle (702) in eine Translationsbewegung des Kolbens (708) und umgekehrt gewährleistet.

6. Mantelstromtriebwerk (100) nach einem der Ansprüche 1 bis 3, **dadurch gekennzeichnet, dass** der Einziehmechanismus für jede Walze (254) Folgendes umfasst: eine Umlenkrolle (520), die koaxial an der Walze (254) befestigt ist, eine Aufrollrolle (702), ein Aufrollseil (522), dessen eines Ende an der festen Struktur (206) befestigt ist und dessen anderes Ende an der Aufrollrolle (702) befestigt ist und wobei das Aufrollseil (522) über die Umlenkrolle (520) verläuft, und einen auskoppelbaren elektrischen Aufroller, an dem die Aufrollrolle (702) befestigt ist.

7. Mantelstromtriebwerk (100) nach einem der Ansprüche 1 bis 6, **dadurch gekennzeichnet, dass** es für jedes Segel (252) ein Rückstellelement (402) umfasst, welches das Segel (252) in die eingezogene Stellung zurückzwingt.

8. Mantelstromtriebwerk (100) nach Anspruch 7, **dadurch gekennzeichnet, dass** jedes Rückstellelement (402) eine Schraubenfeder ist, deren eines Ende an der zweiten Kante des betrachteten Segels (252) befestigt ist und deren zweites Ende an einem Element befestigt ist, das in Bezug auf die Walze (254), die mit dem betrachteten Segel (252) assoziiert ist, fest ist.

9. Flugzeug (10), das mindestens ein Mantelstromtriebwerk (100) nach einem der vorhergehenden Ansprüche umfasst.

## Claims

1. Ducted fan turbine engine (100) having a longitudinal direction (X) and comprising an engine (20) and a nacelle (102) surrounding the engine (20) which comprises a fan casing (202) in which a duct (204) for a secondary flow (208) is delimited between the nacelle (102) and the engine (20) and wherein an air flow circulates from the front towards the rear of the ducted fan turbine engine (100), said nacelle (102) comprising:
- a fixed structure (206) fixed to the fan casing (202),
- a mobile cowl (216) capable of translational movement on the fixed structure (206) in a direction of translation between a forward position in which the mobile cowl (216) is positioned in such a way that it is close up to the fan casing (202) and a backward position in which the mobile cowl (216) is positioned in such a way that it is distant from the fan casing (202) in order to define between these a passage (220) open between the duct (204) and the outside of the nacelle (102),
- a set of actuators causing the mobile cowl (216) to move between the forward position and the backward position, and vice versa,
- a plurality of rollers (254), each mounted with the freedom to rotate on the mobile cowl (216) to the rear of the passage (220) when the mobile cowl (216) is in the backward position,
- for each roller (254), a flexible screen (252) having a first edge fixed to the roller (254) and a second edge opposite to the first edge, in which said screen (252) can alternately adopt a furled position in which said screen (252) is wound up around the roller (254) or a deployed position in which said screen (252) is unwound from the roller (254) and stretched between the roller (254) and the engine (20) across the duct (204),
- a deployment mechanism (500) arranged to move the second edge of each screen (252) so as to move said screen (252) from the furled position to the deployed position, and
- a furling mechanism (700) arranged to drive each roller (254) in rotation so as to move the screen (252) associated with said roller (254) from the deployed position to the furled position.

2. Ducted fan turbine engine (100) according to Claim 1, **characterized in that** the deployment mechanism (500) comprises:
- for each second edge, a plate (502) firmly secured to the second edge,
- for each plate (502), at least one hauling pulley (504) mounted with the freedom to rotate on said plate (502),
- a cable (506) which passes over each hauling pulley (504), and
- for each end of said cable (506), a disengageable movement system (508) which hauls on said end.

3. Ducted fan turbine engine (100) according to Claim 2, **characterized in that** there is a hauling pulley (504) at each end of said plate (502).

4. Ducted fan turbine engine (100) according to one of Claims 1 or 2, **characterized in that** each deployment system (508) comprises a set of guide pulleys (510) and an electric roller (512) onto which the cable (506) is wound.

5. Ducted fan turbine engine (100) according to one of Claims 1 to 3, **characterized in that** the furling mechanism (700) comprises, for each roller (254), a diverting pulley (520) fixed coaxially to the roller (254), a winding pulley (702) fixed to the fixed structure (206), a winding cable (522) of which one end is fixed to the fixed structure (206) and of which the other end is fixed to the winding pulley (702) and in which the winding cable (522) passes over the diverting pulley (520), a nitrogen damper (704) of which a cylinder (706) is fixed to the fixed structure (206) and of which a piston (708) is able to slide in the cylinder (706), and a conversion system (710) which converts the rotational movement of the winding pulley (702) into a translational movement of the piston (708) and vice versa.

6. Ducted fan turbine engine (100) according to one of Claims 1 to 3, **characterized in that** the furling mechanism comprises, for each roller (254), a diverting pulley (520) fixed coaxially to the roller (254), a winding pulley (702), a winding cable (522) of which one end is fixed to the fixed structure (206) and of which the other end is fixed to the winding pulley (702) and in which the winding cable (522) passes over the diverting pulley (520), and a disengageable electric winder to which the winding pulley (702) is fixed.

7. Ducted fan turbine engine (100) according to one of Claims 1 to 6, **characterized in that**, for each screen (252) it comprises a return element (402) which urges the screen (252) into the furled position.

8. Ducted fan turbine engine (100) according to Claim 7, **characterized in that** each return element (402) is a helical spring of which one end is fixed at the second edge of the screen (252) concerned and a second end is fixed at an element that is fixed with respect to the roller (254) associated with the screen (252) concerned.

9. Aircraft (10) comprising at least one ducted fan turbine engine (100) according to one of the preceding claims.
